Europäisches Patentamt

European Patent Office

Office européen des brevets

(19)

(11) Veröffentlichungsnummer: **0 126 020**
**A1**

(12) **EUROPÄISCHE PATENTANMELDUNG**

(21) Anmeldenummer: 84730034.0

(22) Anmeldetag: 09.04.84

(51) Int. Cl.³: **B 61 L 23/00**
**B 61 L 27/04, B 61 B 13/00**

(30) Priorität: 18.04.83 DE 3313951

(43) Veröffentlichungstag der Anmeldung:
21.11.84 Patentblatt 84/47

(84) Benannte Vertragsstaaten:
CH DE FR GB LI

(71) Anmelder: **Siemens Aktiengesellschaft
Berlin und München Wittelsbacherplatz 2
D-8000 München 2(DE)**

(72) Erfinder: **Dziggel, Klaus-Peter, Dipl.-Ing.
Küsterstrasse 18
D-1000 Berlin 20(DE)**

(54) Förderanlage mit mittels eines Deckels verschliessbaren elektrisch angetriebenen Förderwagen.

(57) Die Verschlußstellung des Deckels (VD) ist mittels eines Riegels (VR) gesichert, dem eine elektromechanische Antriebsvorrichtung (AM) zugeordnet ist. Ein an einer Sendestation in eine Steuereinrichtung (S) des Förderwagens eingegebener Steuercode hält die Verriegelung bis zur Eingabe eines geeigneten Berechtigungscodes an einer Empfangsstation aufrecht.

Die Erfindung wird in Förderanlagen zum innerbetrieblichen Transport von Akten eingesetzt, um unbefugten Personen einen Zugriff zum Behälterinhalt zu verwehren.

FIG 1

EP 0 126 020 A1

SIEMENS AKTIENGESELLSCHAFT – 1. Unser Zeichen

Berlin und München VPA 83 P 4037 E

Förderanlage mit mittels eines Deckels verschließbaren
elektrisch angetriebenen Förderwagen

Die Erfindung betrifft eine Förderanlage mit elektrisch angetriebenen Förderwagen, deren Behälterraum jeweils zur Aufnahme von Akten und/oder Fördergut ähnlicher Abmessungen bzw. ähnlichen Gewichts ausgebildet und mittels eines Deckels verschließbar ist, und mit Fördertrassenverzweigungsstellen zugeordneten Abfrageeinrichtungen zur Abfrage von an Sendestationen mittels manuell betätigbarer Einstelleinrichtungen in förderwagenindividuelle Zielspeicher eingegebenen Zielinformationen.

Derartige Förderanlagen werden bevorzugt zum innerbetrieblichen Transport innerhalb von Gebäuden eingesetzt, wobei typischerweise Stationseinrichtungen über die Fördertrassenverzweigungsstellen in Haupttrassen einmünden und die Stationseinrichtungen zumeist kombinierte Sende- und Empfangsstationen darstellen.

Die Verriegelung des Deckels des Förderbehälters wird dabei aus Gründen der Betriebssicherheit vorgenommen; insbesondere in Fördertrassenbereichen, in denen die Förderwagen in hängender Lage laufen, könnte bei nicht geschlossenem Deckel das Fördergut aus dem Behälterraum herausfallen. Die Verriegelung wird bei einem aus dem DE-GM 76 12 348 bekannten Förderwagen durch eine umgebogene Randfläche des Deckels erreicht, auf die eine außen am Behälterraum befestigte Sperrklinke aufgeschoben werden kann. Die Sperrklinke betätigt in ihrer Arbeitslage eine

Om 3 Sz / 18.04.1983

Kontakteinrichtung zur Überwachung der Verschlußstellung; ist die Kontakteinrichtung nicht betätigt, kann der Antriebsstromkreis für den Förderwagen nicht aktiviert werden.

In den bekannten Förderanlagen kann nicht sichergestellt werden, daß auf der Strecke zwischen einer Sendestation und einer Empfangsstation der Deckel nicht geöffnet wird. Eine derartige Öffnung kann auf nicht sachgemäßem Verschließen des Deckels oder auf einer gewollten oder ungewollten Betätigung des Riegels beruhen. Insbesondere ist ein unbefugtes Öffnen der Förderbehälter durch dazu nicht autorisierte Personen denkbar. Diese Möglichkeit des unbefugten Zugriffs auf den Behälterraum derartiger Förderwagen kann u. U. das Anwendungsspektrum solcher Förderanlagen einschränken, da häufig keine Trassenführung möglich ist, bei der sämtliche Bereiche der Fördertrasse in vor unbefugtem Zugriff sicheren Räumlichkeiten gelegen sind. Dieses Problem könnte dadurch gelöst werden, daß die Förderbehälter verschließbar ausgestaltet werden. Der Aufwand hierfür ist jedoch als verhältnismäßig groß anzusehen, insbesondere wenn diese Schlösser gegen unbefugtes Öffnen weitgehende Sicherheit bieten sollen.

In einer - aus der DE-OS 30 47 433 bekannten - Förderanlage wird auch ohne den Einsatz von Schlössern an den Behälterräumen eine weitgehende Sicherheit gegen unbefugten Zugriff dadurch erreicht, daß die Fördertrassen in den Bereichen, in denen an sich ein unbefugter Zugriff möglich wäre, in Deckenbereich der Räume gelagert sind, so daß jeder Förderwagen in diesen Bereichen in hängender Lage fährt; im Inneren der Behälterräume ist dabei ein Riegelkörper gelagert, der bei Übergang des Förderwagens in seine hängende Lage aufgrund der Schwerkraftwirkung in eine Sperrkontur des Riegels oder des Deckels im Sinne einer zusätzlichen Verriegelung einfällt. Da der Riegel von außen nicht zugänglich ist, kann jede ungewollte Öffnung des Deckels durch in die Förderbahn ragende Hindernisse oder durch zum Öffnen nicht befugte Personen mit Sicherheit vermieden werden. Diese Sicherung der Förderwagen gegen unbefugtes Öffnen ermöglicht aber keine vollkommen freizügige Wahl der Trassenführung, da in allen Bereichen, in denen eine Kontrolle der auf den Trassen befindlichen Förderwagen nicht möglich ist - insbesondere in Bereichen, zu denen Betriebsfremde Zutritt haben - die Fördertrassen so angeordnet werden müssen, daß die Förderwagen in ihnen hängend laufen.

Die der Erfindung zugrunde liegende Aufgabe besteht darin, bei Beibehaltung einer vollständigen Sicherheit gegen unbefugtes Öffnen der Behälterräume völlige Freiheit der Trassenführung zurückzugewinnen. Dies wird erfindungsgemäß dadurch erreicht, daß dem Riegel eine elektro-mechanische Antriebsvorrichtung zugeordnet ist, die derart unter dem Steuereinfluß einer eine Berechtigungsauswerteeinrichtung aufweisenden wageneigenen Steuereinrichtung steht, daß ein an einer Sendestation in den Förderwagen eingegebener Sperrkode bis zur Eingabe eines entsprechenden Berechtigungskodes an einer Empfangsstation zu einer mit der Blockierung des Riegels verbundenen Sperre der Steuereinrichtung führt.

Für die Zuführung des Sperrkodes zur Steuereinrichtung bestehen mehrere Möglichkeiten, von denen als eine besonders vorteilhafte anzusehen ist, daß der Sperrkode mittels der Einstelleinrichtungen eingegeben wird. Damit bedarf es keiner zusätzlichen Einrichtungen zur Bildung des Sperrkodes, sondern die für die Eingabe der Zielinformationen benötigten Einstelleinrichtungen werden auch für die Eingabe des Sperrkodes herangezogen. Sofern - wie

0126020

bei bekannten Förderanlagen üblich – in Führungsleisten verschiebbare Magnete als Einstelleinrichtungen dienen, können zusätzliche Magnete vorgesehen sein, mit denen der Sperrkode gebildet wird. Dies kann beispielsweise derart erfolgen, daß die einer Nullstellung am nächsten gelegenen zwei oder drei Magnete für die Bildung des Sperrkodes, weitere zwei oder drei Magnete für die Bildung der Zielinformation herangezogen werden. Ebenso ist denkbar, die Einstellelemente für die Bildung des Sperrkodes von den der Bildung der Zielinformation dienenden Einstellelementen zu trennen und eine gesonderte Führungsleiste für Magnete oder ähnliche Einstellelemente vorzusehen.

Der für die Bildung eines Sperrkodes notwendige Aufwand kann aber erheblich reduziert bzw. nahezu völlig eleminiert werden, wenn die Einstelleinrichtungen jeweils einen Sendeausgang aufweisen, der drahtlos auf entsprechend ausgebildete Empfangseingänge der Förderwagen einwirkt. Eine derartige Ausbildung der Einstelleinrichtungen ist beispielsweise aus der DE-OS 28 13 420 bekannt, wobei als Beispiel für die drahtlose Übertragung eine Infrarotübertragung angegeben ist. Die Einstelleinrichtungen können damit in besonders einfacher Weise durch Schalter bzw. Tasten gebildet sein, deren Betätigung durch eine einstelleinrichtungsinterne Schaltungseinrichtung zu entsprechenden Sendeinformationen umgesetzt wird. Bei Benutzung einer derartigen Einstelleinrichtung für die Bildung des Sperrkodes ist darauf zu achten, daß die ebenfalls über die Einstelleinrichtungen übertragenen Zielinformationen und die Sperrkodeinformationen deutlich voneinander getrennt werden. Dies geschieht beispielsweise derart, daß die Zielinformationen und der Sperrkode mittels eines zielinformations- und/oder sperrkodespezifischen Informationsbestandteils unterscheidbar sind. Es kann beispielsweise eine von zehn an der Einstelleinrichtung auswählbaren Ziffern jeweils als erste Ziffer für den Sperrkode bestimmt sein. Die Unterscheidung der Zielinformationen und des Sperrkodes kann aber auch dadurch erfolgen, daß alle Zielinformationen einen gleichen Informationsumfang, d.h. beispielsweise die gleiche Anzahl von Ziffern aufweisen und daß eine vorgegebene Reihenfolge der Eingabe von Zielinformationen und des Sperrkodes eingehalten wird.

Eine weitere vorteilhafte Ausgestaltung der Erfindung bezieht sich auf die Bildung des Berechtigungskodes und sieht vor, daß der Berechtigungskode mittels der Einstelleinrichtungen eingegeben wird. Damit werden nicht nur die Zielinformationen und der Sperrkode, sondern auch der Berechtigungskode durch die Einstelleinrichtungen gebildet. Sofern die Einstelleinrichtungen - wie geschildert - eine drahtlose Übertragung von Informationen eines ortsfesten Senders an den Förderwagen vorsehen, ist für die Bildung des Berechtigungskodes kein zusätzlicher Aufwand erforderlich.

Für die Eingabe des Sperrkodes und des Berechtigungskodes in den Förderwagen kann aber auch gänzlich auf manuelle Einwirkung an Einstelleinrichtungen verzichtet werden. Das Tätigwerden einer Bedienungsperson wird dabei dadurch ersetzt, daß der Sperrkode wagenintern aus den in die Zielspeicher eingegebenen Zielinformationen ableitbar ist. So kann beispielsweise festgelegt werden, daß bestimmten Empfangsstationen ausschließlich Förderwagen mit gesichertem Deckelverschluß des Behälterraumes zugesandt werden dürfen. Bei Eingabe einer zu einer solchen Station gehörenden Zielinformation wird beispielsweise durch Vergleich mit in der Steuereinrichtung gespeicherten Zielinformationen für die beschriebene Gattung von Empfangsstationen das Vorliegen einer zur automatischen Bildung eines Sperrkodes führenden Zielinformation erkannt und
der zugehörige Sperrkode an die Steuereinrichtung abgegeben.

Es ist aber auch möglich, daß an allen Förderwagen, die
von einer bestimmten Sendestation zu beliebigen Empfangsstationen fahren, eine Blockierung des Riegels vorgenommen werden soll. In einem solchen Fall kann aus der der
Sendestation zugeordneten Zielinformation, die bei Ankunft
des Förderwagens im Zuge eines vorherigen Sendevorgangs
als Zielinformation in den Wagen eingegeben war, der
Sperrkode abgeleitet werden. Denkbar ist auch, daß die
beiden geschilderten Maßnahmen miteinander kombiniert
werden, d. h. daß bei Absenden eines Förderwagens an
einer ganz bestimmten Sendestation zu einer ganz bestimmten anderen Sendestation die beiden Zielinformationen
miteinander korreliert werden und bei Vorliegen einer
abgespeicherten Zielinformationskombination der Sperrkode für die Steuereinrichtungen erzeugt wird.

Der steuerungstechnische Aufwand einerseits für die Steuereinrichtung und andererseits für die Speicherung des
Sperrkodes sowie für die Erkennung und Verarbeitung des
Berechtigungskodes kann gemäß einer vorteilhaften Weiterbildung der Erfindung dadurch gering gehalten werden,
daß die Steuereinrichtung durch einen Mikroprozessor gebildet ist, dem an einer Eingangsschnittstelle die Zielinformationen, der Sperrkode und der Berechtigungskode
angeboten werden. Zweckmäßigerweise übernimmt der Mikroprozessor auch die Speicherung der Zielinformationen,
so daß die im Rahmen der Erfindung notwendigen Speicher-,
Umformungs- und Vergleichsaufgaben sämtlich von dem
Mikroprozessor - der vorzugsweise als Einchipprozessor
ausgebildet ist - duchgeführt werden. Die Verwendung
eines Mikroprozessors als wesentlicher Bestandteil einer
wageninternen Steuereinrichtung bietet zugleich den Vorzug
einer weitgehenden Flexibilität der Steuerung, d. h. der Anpassung an unterschiedliche Anlagenverhältnisse und insbesondere Änderungen innerhalb der Anlage, die nicht nur auf die Sicherung des Riegels für den Deckel eines Behälterraums, sondern auch auf Änderung der Zielinformation und der Berechtigungen bezogen sein können.

Die Erfindung wird im folgenden anhand eines in zwei Figuren dargestellten Ausführungsbeispiels erläutert.

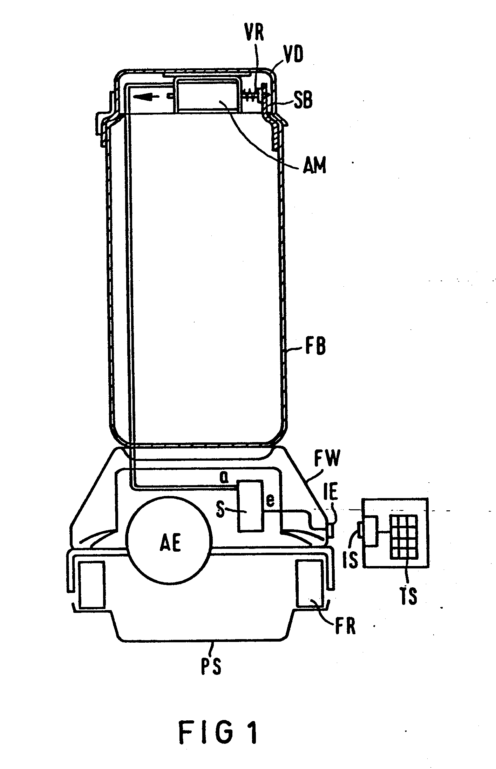

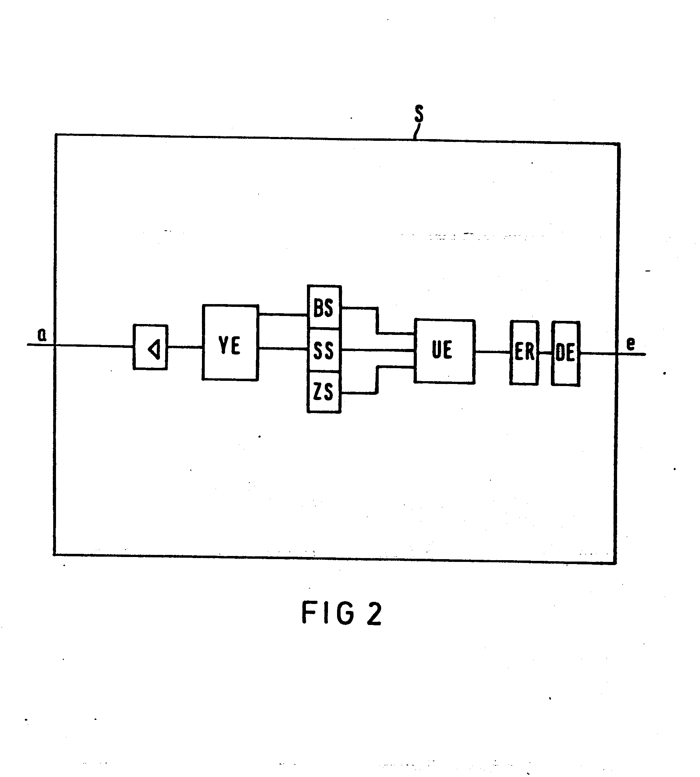

Die Figur 1 zeigt in schematischer Darstellung einen auf Schienen laufenden Förderwagen am Ort einer Sende- und Empfangsstation, während in der Figur 2 ebenfalls in schematischer Darstellung Einzelheiten der wageneigenen Steuereinrichtung gezeigt sind.

Der in der Figur 1 dargestellte Förderwagen ist im weseentlichen durch einen auf einem Fahrwerk FW montierten Förderbehälter FB gebildet, der in seinem oberen Bereich einen Verschlußdeckel VD aufweist. Im Verschlußdeckel VD ist ein Antriebsmagnet AM gelagert, an den ein Verschlußriegel VR angelenkt ist. In der dargestellten Lage des Verschlußriegels VR greift dieser in eine Öffnung eines am Förderbehälter FB montierten Schließbügels SB ein.

Das Fahrwerk FW läuft mit Fahrrollen FR auf Laufbahnen, die durch eine Profilschiene PS gebildet sind. Der Antrieb erfolgt elektromotorisch mittels einer Antriebseinrichtung AE, die ihre Antriebsenergie über nicht dargestellte Strombahnen auf der Profilschiene PS bezieht. Die Steuerung des Antriebsmagneten AM erfolgt mittels einer Steuereinrichtung S, die an einen Infrarotempfänger IE angeschlossen ist. Der Infrarotempfänger IE wird von einem Infrarotsender IS beeinflußt, dessen Ausgangsinformation mittels eines manuell betätigbaren Tastensatzes TS bestimmt wird.

**0126020**

Die in Fig. 2 näher dargestellte Steuereinrichtung S enthält eine an einen Eingang e angeschlossene Dekodiereinrichtung DE, der ein Empfangsregister ER nachgeschaltet ist. Mit Hilfe des Infrarotsenders IS bzw. des Infrarotempfängers IE können sowohl Zielinformationen als auch Sperrcode bzw. Berechtigungscode in die Steuereinrichtung S eingegeben werden. Eine dem Empfangsregister ER nachgeschaltete Unterscheidungseinrichtung UE dient der Zuordnung der am Eingang e empfangenen Information zu drei Speichern ZS, SS bzw. BS, wobei der Speicher ZS die Zielinformationen, der Speicher SS den Sperrcode und der Speicher BS den Berechtigungscode aufnimmt. Die Ausgänge der Speicher BS und SS sind an eine Vergleichereinrichtung VE angeschlossen, die bei gleichzeitigem Vorliegen miteinander identischer bzw. in vorgegebener Weise miteinander korrelierter Speicherinformationen in den beiden Speicher BS und SS ein Ausgangssignal abgibt, das mit Hilfe einer nachgeschalteten Verstärkereinrichtung über einen Ausgang a dem Antriebsmagneten AM des Verschlußriegels VR zugeführt wird. Damit erfolgt eine Entriegelung des Verschlußdeckels VD.

2 Figuren
7 Patentansprüche

Patentansprüche

1. Förderanlage mit elektrisch angetriebenen Förderwagen, deren Behälterraum jeweils zur Aufnahme von Akten und/oder Fördergut ähnlicher Abmessungen bzw. ähnlichen Gewichts ausgebildet und mittels eines Deckels verschließbar und in der Verschlußstellung durch einen auf den Deckel einwirkenden Riegel sichtbar ist, und mit Fördertrassenverzweigungsstellen zugeordneten Abfrageeinrichtungen zur Abfrage von an Sendestationen mittels manuell betätigbarer Einstelleinrichtungen in förderwagenindividuelle Zielspeicher eingegebenen Zielinformationen, d a d u r c h   g e k e n n z e i c h n e t , daß dem Riegel (VR) eine elektromechanische Antriebsvorrichtung (AM) zugeordnet ist, die derart unter dem Steuereinfluß einer eine Berechtigungsauswerteeinrichtung (VE) aufweisenden wageneigenen Steuereinrichtung (S) steht, daß ein an einer Sendestation in die Steuereinrichtung (S) eingegebener Sperrcode bis zur Eingabe eines entsprechenden Berechtigungscodes an einer Empfangsstation zu einer mit der Blockierung des Riegels (VR) verbundenen Sperre der Steuereinrichtung (S) führt.

2. Förderanlage nach Anspruch 1, d a d u r c h   g e k e n n - z e i c h n e t , daß der Sperrcode mittels der Einstelleinrichtungen (TS) eingebbar ist.

3. Förderanlage nach Anspruch 2, d a d u r c h   g e k e n n - z e i c h n e t , daß die Zielinformationen und der Sperrcode mittels eines zielinformations- und/oder sperrcodespezifischen Informationsbestandteils unterscheidbar sind.

4. Förderanlagen nach einem der Ansprüche 1 bis 3, d a - d u r c h  g e k e n n z e i c h n e t , daß der Sperrcode wagenintern aus den in die Zielspeicher (ZS) eingegebenen Zielinformationen ableitbar ist.

5. Förderanlage nach einem der Ansprüche 1 bis 4, d a - d u r c h  g e k e n n z e i c h n e t , daß der Berechtigungscode mittels der Einstelleinrichtungen (TS) eingebbar ist.

6. Förderanlage nach einem der Ansprüche 1 bis 5, d a - d u r c h  g e k e n n z e i c h n e t , daß die Einstelleinrichtungen (TS) jeweils einen Sendeausgang aufweisen, der drahtlos auf entsprechend ausgebildete Empfangseingänge (e) der Förderwagen einwirkt.

7. Förderanlage nach einem der Ansprüche 1 bis 6, d a - d u r c h  g e k e n n z e i c h n e t , daß die Steuereinrichtung (S) durch einen Mikroprozessor gebildet ist, dem an einer Eingangsschnittstelle die Zielinformationen, der Sperrcode und der Berechtigungscode angeboten werden.

FIG 1

FIG 2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | AT-B- 291 853 (BÜRO PATENT) <br> * Insgesamt * <br><br> --- | 1-6 | B 61 L 23/00 <br> B 61 L 27/04 <br> B 61 B 13/00 |
| D,A | DE-A-3 047 433 (SIEMENS) <br> * Ansprüche * <br><br> --- | 1 | |
| A | DE-A-2 307 686 (SIEMENS AG) <br> * Ansprüche * <br><br> ----- | 1 | |

| RECHERCHIERTE SACHGEBIETE (Int. Cl. ³) |
|---|
| B 61 L <br> B 61 B |

Der vorliegende Recherchenbericht wurde für alle Patentansprüche erstellt.

| Recherchenort <br> DEN HAAG | Abschlußdatum der Recherche <br> 03-08-1984 | Prüfer <br> REEKMANS M.V. |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503. 03.82